Europäisches Patentamt

European Patent Office

Office européen des brevets

(11) Publication number : **0 495 662 A1**

## (12) EUROPEAN PATENT APPLICATION

(21) Application number : **92300391.7**

(51) Int. Cl.⁵ : **C04B 35/48, C04B 35/62**

(22) Date of filing : **16.01.92**

(30) Priority : **16.01.91 JP 3223/91**

(43) Date of publication of application :
**22.07.92 Bulletin 92/30**

(84) Designated Contracting States :
**DE FR GB**

(71) Applicant : **JAPAN ABRASIVE CO., LTD.**
**90, Ishizukita-machi**
**Sakai Osaka (JP)**

(72) Inventor : **Tamamaki, Masahiro**
**c/o Japan Abrasive Co., Ltd., 90,**
**Ishizukita-machi**
**Sakai, Osaka (JP)**
Inventor : **Onoda, Yoshihiro**
**c/o Japan Abrasive Co., Ltd., 90,**
**Ishizukita-machi**
**Sakai, Osaka (JP)**
Inventor : **Tsuda, Koji**
**c/o Japan Abrasive Co., Ltd., 90,**
**Ishizukita-machi**
**Sakai, Osaka (JP)**

(74) Representative : **Darby, David Thomas et al**
**Abel & Imray Northumberland House 303-306**
**High Holborn**
**London WC1V 7LH (GB)**

(54) **Refractory materials.**

(57)   Fused alumina-zirconia-yttria refractory materials having high-temperature resistance and corrosion resistance which includes 10-60 wt% of zirconia and 0.05-7 wt% of yttria or rare earth minerals including yttria, which are produced by the process comprising adding and mixing zirconia and yttria or rare earth minerals including yttria to alumina materials, fusing the mixed materials in an electric arc furnace, cooling the fused materials to obtain an ingot, crushing the ingot and classifying the crushed materials.

EP 0 495 662 A1

This invention relates to a fused alumina-zirconia refractory material having high-temperature heat resistance and corrosion resistance and a method for producing the same, and more particularly to a fused refractory material of alumina-zirconia-yttria system and a method for producing the same.

Nowadays, 70-80% of steels have been produced by a continuous casting method. In continuous casting equipment, there has been used a long nozzle, tundish nozzle, and submerged nozzle each made of alumina or zirconia refractory materials in order to connect a ladle to a tundish and to connect a tundish to a mold. Recently a sliding nozzle has often been used preceeding them in order to control the flow of molten steel. Said sliding nozzle must have extremely high properties compared with other refractory materials used in the continuous casting equipment, because it controls the flow of molten steel. In particular, the sliding nozzle is subjected to physical deterioration such as abrasion by the flow of molten steel, abrupt thermal shock and slide abrasion, and it is also subjected to chemical corrosion caused by molten steel or molten steel slug. As a result, the sliding nozzle must have such properties as abrasion resistance, spalling resistance and corrosion resistance.

Various materials have been developed heretofore. Among others, aluminous materials have been used well. In general, Tar or pitch is impregnated into aluminous materials for improving the lifetime of the sliding nozzle. There have been such problems, however, that remarkable smoking of tar or pitch occurs in operation whereby working atmosphere is polluted and the sliding nozzle equipment is spoiled as a whole. Therefore, it is a recent tendancy to use non-smoking materials such as alumina-carbon materials, alumina-mullite-carbon materials or alumina-zirconia mullite-carbon materials having a low thermal expansion rate which are obtained by adding natural materials such as sillimanite, andalusite etc. and/or synthetic materials such as mullite, zirconia mullite etc. to alumina-carbon materials.

These materials give a certain satisfaction in corrosion resistance, but problems peculiar to the sliding nozzle such as edge breakage of nozzle tip, and surface peeling of a sliding portion have not been solved yet.

Also developed have been the following refractory materials and/or refractories.

Japanese patent publication No. 64-11589 disclosed a method for producing a sliding nozzle wherein refractory materials were compounded with electromelting alumina-zirconia materials comprising 58-78 wt% of alumina, 20-40 wt% of zirconia and less than 2 wt% of unavoidable components.

Japanese patent publication 64-11590 disclosed a method for producing a sliding nozzle using electromelting alumina-zirconia-titania materials comprising 42-77.5 wt% of alumina, 20-40 wt% of zirconia, 0.5-16 wt% of titania and less than 2 wt% of unavoidable components.

These electromelting alumina-zirconia or alumina-zirconia-titania materials have hight strength because the crystal size of corundum which precipitates by fusing and cooling alumina and zirconia or zirconia-titania is small and the crystal develops dendritically in three dimensional directions. When the sliding nozzle cracks, the progression route of the cracks detours the coarse grains of electromelted alumina-zirconia or alumina-zirconia-titania in a zigzag form and the peeling of structure is prevented. As a result, the edge breakage or the surface peeling of the sliding portion are prevented. The thermal expansion rate is as low as $6 \times 10^{-6}/°C$ which corresponds to $5\text{-}6 \times 10^{-6}/°C$ of the zirconia mullite materials while the thermal expansion rate of alumina materials is $9 \times 10^{-6}/°C$. Accordingly high-temperature heat resistance seems to be high. As the melting point is low and the content of silica ($SiO_2$) having high reactivity is as low as being less than 2 wt%, corrosion resistance is high. Then the high-temperature heat resistance, abrasion resistance and corrosion resistance can be obtained at the nozzle tip and the lifetime of the sliding nozzle is prolonged.

These alumina-zirconia refractory materials, however, contain 20-40 wt% of zirconia($ZrO_2$) as a main component, so that cracks occur during a heat cycle of heating and cooling and consequently destruction is caused, because zirconia is a multi-modification mineral which is monoclinic from room temperature to about 650 °C, tetragonal up to about 1100 °C and cubic up to about 2700 °C and abnormal shrinkage and expansion of higher than 5% occur at the phase transition from monoclinic to tetragonal.

In the case of alumina-zirconia-titania materials, the addition of titania acts as a stabilizer of zirconia and abnormal shrinkage and expansion of zirconia can be restrained to a certain degree. But titania is not the most suitable stabilizer of zirconia. When $TiO_2$ is added to $ZrO_2$ at the rate of 10 wt% of the amount of zirconia, for example, 2 wt% of $TiO_2$ to 20 wt% of $ZrO_2$, 4 wt% of $TiO_2$ to 40 wt% of zirconia, the stabilization rate is only 30-60%. Accordingly, for a perfect stabilization, a large quantity of $TiO_2$ shall be added. But in case $TiO_2$ is added in large quantities, zirconium titanate ($ZrTiO_4$) yields, so that the grain strength of materials becomes very weak.

As mentioned above, the refractory materials of the prior art are not satisfactorily improved in such properties as grain strength, corrosion resistance and high-temperature heat resistance. As a result, they have not been satisfactory yet for highly improving the strength and corrosion resistance of the sliding nozzle to be used in a recent clean steel technology for the production of a high tension steel.

The present invention makes it possible to solve all of the above problems and to provide fused alumina-zirconia-yttria refractory materials having high properties in high-temperature heat resistance and in corrosion resistance and to provide a method for producing the same.

Having made earnest researches, we have found that novel refractory materials having high grain strength, free from abnormal shrinkage and expansion caused by a heat cycle between a high temperature and room temperature and having an improved corrosion resistance against molten steel can be obtained by adding zirconia and yttria or other rare earth mineral including yttria to alumina and subjecting the composition to fusing and cooling to solidity and thereby we can solve such problems peculiar to the sliding nozzle as edge breakage of the nozzle tip by abrupt heat shock and surface peeling of the sliding portion.

Namely, the present invention provides alumina-zirconia-yttria refractory materials, especially fused alumina-zirconia-yttria refractory materials having high properties in high-temperature heat resistance and in corrosion resistance, which include (A) zirconia and (B) yttria or other rare earth mineral including yttria, the proportion of (A) preferably being 10-60 wt% and the proportion of (B) preferably being 0.05-7 wt %.

The above alumina-zirconia-yttria refractory materials can be produced according to a general electrofusing process, that is, fusing process using an electric arc furnace. Namely, a method for producing fused alumina-zirconia-yttria refractory materials in accordance with the present invention comprises adding and mixing zirconia and yttria or other rare earth mineral including yttria to alumina materials, fusing the mixed materials in an electric arc furnace and cooling the fused materials to get an ingot, crushing the ingot and classifying the crushed materials. The additive amount of yttria or other rare earth mineral including yttria is preferred to be 0.05-7 wt%.

Conventional aluminous refractory materials or alumina-mullite or alumina-mullite zirconia refractory materials having a low thermal expansion rate which are obtained by adding naturel materials such as sillimanite, andalusite etc. and/or synthetic materials such as mullite, zirconia mullite etc. to aluminous materials have such deficiencies, as mentioned above, that thermal expansion rate is high, grain strength is low or corrosion resistance is low because $SiO_2$ is contained in large quantities. On the other hand, alumina-zirconia or alumina-zirconia-titania refractory materials have high grain strength, but abnormal shrinkage and expansion occurs during a heat cycle between a high temperature and a room temperature and thereby cracks occur to cause destruction.

Having studied the problems in the prior art, we have confirmed that there can be provided improved refractory materials by adding yttria or rare earth mineral including yttria to alumina-zirconia system. Said novel refractory materials substantially free from deficiencies of conventional alumina-zirconia refractory materials, that is, they are substantially free from cracks and destruction caused by abnormal shrinkage and expansion which occur during a heat cycle between a high temperature and room temperature, and the grain strength is high.

The additive amount of zirconia is preferred to be 10-60 wt% so as to obtain at least 25 vol% of eutectic composition of alumina-zirconia microstructure. 10 wt% of zirconia content gives 75 vol% of alumina primary crystal and 25 vol% of alumina-zirconia eutectic composition. 60 wt% of zirconia content gives 30 vol% of zirconia primary crystal and 70 wt% of eutectic composition. In the case where the content of alumina or zirconia primary crystal is higher than the above, monocrystal of coarse structure increases and alumina-zirconia eutectic composition of microstructure decreases, which results in less preferred composition.

Yttria can be added to zirconia up to 17.5 wt%, for example, 3.5 wt% of $Y_2O_3$ to 20 wt% of $ZrO_2$ and 7 wt% of $Y_2O_3$ to 40 wt% of $ZrO_2$. In the present invention, however, yttria is preferably added in the range of 0.05-7 wt%, because yttria is expensive for use as a refractory material and also a phase transition of zirconia to cubic form occurs when the additive amount of yttria exceeds 7 wt%, and this may be disadvantageous in some circumstances.

Other rare earth oxides such as $CeO_2$, $Yb_2O_3$, $Gd_2O_3$, $Sm_2O_3$, $La_22O_3$, $Nd_2O_3$ or $Er_2O_3$ are not preferred to be used by themselves because these rare earth oxides need to be added in large quantities in order to accomplish the object. As a result the refractory materials obtained become very expensive. Accordingly, if used, they are preferably used together with yttria.

At least one member selected from the group consisting of CaO, MgO and $TiO_2$ can be added as a stabilizer of zirconia, preferably in an amount of up to 7 wt% including the yttria content, without badly affecting the heat resistance and strength.

It is preferred to cool the fused materials rapidly using the cooling method and apparatus which are disclosed in US Patent No. 4,671,917, because the primary alumina or zirconia decreases and the crystal size of alumina and zirconia in the eutectic composition becomes smaller than 1 $\mu$m and thereby the grain strength is improved more.

Fused alumina-zirconia-yttria refractory materials thus obtained shows an improvement in the grain strength and the occurence of cracks during a heat cycle between a high temperature and room temperature is prevented. As a result, refractory materials suitable for clean steel technology are obtained.

As said refractory materials can be produced by fusing, cooling and solidifying the mixed materials using an electrofusing process, the addition of yttria materials serves effectively to obtain refractory materials having high grain strength in an easy process, compared with a binding method using a binder, annealing method and sintering method.

EXAMPLES

There were prepared Baddeleyite (96% $ZrO_2$) as zirconia materials, bayer alumina (99% $Al_2O_3$) as alumina materials and yttria or other rare earth mineral including yttria as shown in the following Table 1.

Table 1

| | Yttria(wt%) | Rare earth oxide including Yttria(wt%) |
|---|---|---|
| $Y_2O_3$ | 99.9 | 60 |
| $Fe_2O_3$ | 0.0015 | 0.013 |
| $Na_2O_3$ | 0.0015 | - |
| $K_2O$ | 0.0015 | - |
| $SiO_2$ | 0.001 | 0.05 |
| $La_2O_3$ | - | <10 |
| $CeO_2$ | - | <10 |
| $Nd_2O_3$ | - | <10 |
| $Yb_2O_3$ | - | 6 |
| $Er_2O_3$ | - | 6.5 |
| $Sm_2O_3$ | - | 2 |

Materials mixed as shown in Table 2 were fused in an electric arc furnace with a secondary voltage of 95 V and average loading electric power of 300 kW. After the operation, fused materials were cooled rapidly in such a manner as disclosed in US Patent No. 4,671,917 to get an ingot. The ingot obtained was then crushed into particles of below 3 mm using a crusher such as a jaw crusher or a roll crusher to obtain samples. Samples thus obtained were classified by using a sieve to obtain particles of 2.8-2.36 mm for measurement of stabilization rate and grain strength.

Stabilization rate is the ratio of the sum of cubic phase and tetragonal phase to total zirconia phase. It can be determined using an X-ray powder diffraction method. The following arithmetic equation can be used for measuring the stabilization rate $I_{(c+T)}(\%)$ on the basis of diffraction peak intensity of cubic $I_C(111)$, tetragonal $I_T(111)$, monoclinic $I_M(-111)$ and $I_M(111)$.

$$I_{(c+T)} = \frac{I_C(111) + I_T(111)}{I_C(111) + I_T(111) + I_M(-111) + I_M(111)} \times 100$$

In order to test the probability of destabilization and grain strength variation due to a heat cycle, the samples were subjected to a thermal shock test which repeated the cycle 10 times comprising heating the samples at 1450 °C for 10 minutes in an EREMA furnace and thereafter cooling by water. The variations of stabilization rate and grain strength are as shown in Table 2. Measurement of grain strength was made using a testing machine, AUTOGRAPH of Shimazu Corporation. 50 grains were measured in each sample and the average value was determined as the grain strength (strength per grain).

4

EP 0 495 662 A1

Table 2

| | EMBODIMENTS | | | | | | | | | | COMPARISON EXAMPLES | | | | | EMBODIMENTS | |
|---|---|---|---|---|---|---|---|---|---|---|---|---|---|---|---|---|---|
| Sample No. | 1 | 2 | 3 | 4 | 5 | 6 | 7 | 8 | 9 | 10 | 11 | 12 | 13 | 14 | 15 | 16 | 17 |
| **Composition (wt%)** | | | | | | | | | | | | | | | | | |
| $Al_2O_3$ | 73.9 | 58.3 | 59.1 | 59.7 | 58.2 | 58.1 | 57.2 | 59.0 | 58.4 | 71.4 | 99.5 | 47.5 | 74.6 | 59.5 | 57.9 | 59.4 | 56.0 |
| $ZrO_2$ | 25.2 | 40.8 | 39.5 | 39.8 | 39.5 | 38.5 | 37.4 | 39.6 | 38.5 | 25.4 | – | 36.0 | 25.0 | 40.1 | 39.4 | 40.2 | 36.6 |
| $Y_2O_3$ | 0.48 | 0.52 | 1.03 | 0.10 | 1.98 | 3.02 | 5.04 | – | 0.45 | – | – | – | – | – | – | 0.05 | 7.04 |
| Rare oxide including $Y_2O_3$ | – | – | – | – | – | – | – | 1.06 | – | 1.02 | – | – | – | – | – | – | – |
| $TiO_2$ | 0.23 | 0.20 | 0.20 | 0.20 | 0.18 | 0.21 | 0.19 | 0.19 | 2.45 | 2.00 | – | 0.12 | 0.23 | 0.20 | 2.50 | 0.21 | 0.18 |
| $SiO_2$ | 0.12 | 0.11 | 0.11 | 0.12 | 0.10 | 0.13 | 0.12 | 0.10 | 0.12 | 0.12 | 0.05 | 16.3 | 0.12 | 0.12 | 0.12 | 0.12 | 0.12 |
| **Stabilization efficiency(%)** | | | | | | | | | | | | | | | | | |
| Original | 55 | 78 | 85 | 65 | 92 | 95 | 100 | 75 | 90 | 75 | – | 0 | 24 | 28 | 60 | 45 | 100 |
| After thermal shock | 50 | 72 | 80 | 58 | 88 | 89 | 96 | 68 | 82 | 68 | – | 0 | 8 | 12 | 35 | 35 | 90 |
| Reduction rate | 9.1 | 7.7 | 6.3 | 10.7 | 4.3 | 6.3 | 4.0 | 9.3 | 8.9 | 9.3 | – | – | 66.7 | 57.1 | 41.6 | 22.2 | 10.0 |
| **Strength per grain (kg/piece)** | | | | | | | | | | | | | | | | | |
| Original | 94 | 102 | 105 | 92 | 100 | 90 | 80 | 94 | 90 | 86 | 33 | 45 | 70 | 72 | 80 | 82 | 65 |
| After thermal shock | 85 | 92 | 95 | 82 | 92 | 82 | 73 | 83 | 78 | 75 | 13 | 25 | 45 | 43 | 55 | 65 | 55 |
| Reduction rate | 9.6 | 9.8 | 9.5 | 10.9 | 8.0 | 8.9 | 8.8 | 11.7 | 13.3 | 12.8 | 60.6 | 44.4 | 35.7 | 40.3 | 31.2 | 20.7 | 8.5 |
| **Dissolving destructure (index)** | | | | | | | | | | | | | | | | | |
| | 60 | 55 | 55 | 60 | 55 | 55 | 60 | 65 | 65 | 65 | 200 | 150 | 100 | 95 | 85 | 80 | 75 |

Reduction rate of the stabilization rate and deterioration rate of strength per grain shown in Table 2 are represented by the percentage of the difference between an original value and a value after thermal shock to the original value.

As shown in Table 2, the strength per grain of sample No. 11 of conventional alumina refractory materials and sample No. 12 of conventional zirconia-mullite refractory materials is as low as 33 kg/piece and 45 kg/piece respectively, and the strength becomes lower after the thermal shock test as being 13 kg/piece and 25 kg/piece respectively.

As shown in samples No. 13-15, conventional alumina-zirconia or alumina-zirconia-titania refractory materials which include no yttria shows the stabilization rate of 24-60%, but 8-35% after the thermal shock test. The reduction rate is as high as 41.6-66.7%. The reduction rate of strength per grain is also as high as 31.2-35.7%.

Sample No. 16 containing only 0.05 wt% yttria has a lower reduction rate for the stabilization efficiency and strength per grain, although not as low as those for samples 1 to 10.

Sample No. 17 containing yttria of higher than 7 wt% shows the low reduction rate of 10% in the stabilization rate, but the strength per grain is lower than the prior alumina-zirconia materials. Besides, it is not at present practical in the industrial production because yttria is expensive.

Samples 16 and 17 thus do not shown all the advantages obtainable in accordance with the invention.

On the contrary, samples Nos. 1-10, in which the yttria content is within the preferred range, show preferable results. Namely, the reduction rate in the stabilization rate is less than 11% and the reduction rate of grain strength is less than 14%.

In order to test the corrosion resistance, test pieces of alumina-zirconia-yttria-carbon system of 20 x 20 x 100 mm were prepared by mixing 80 parts by weight of the above samples with a particle size below 3 mm, 8 parts by weight of pitchcokes and 8 parts by weight of SiC. Said test pieces were subjected to a corrosion test using a cryptol furnace. In addition to said test pieces, iron and continuous casting powder were loaded.

After one hour operation at 1550°C, the test pieces were cooled and dissolving destruction was determined at a cut surface. The results are shown in Table 2 in the form of an index by setting the amount of dissolving destruction of sample No. 13 to be 100. The dissolving destructure of samples Nos. 1-10 is as low as 55-65.

As mentioned above, the refractory materials of alumina-zirconia-yttria system in accordance with the present invention have such superior properties that the grain strength is high at room temperature, the stabilization reduction rate after a heat cycle is low, the reduction of grain strength caused by a heat cycle are restrained and the amount of dissolving destruction is small, that is, the corrosion resistance is high. Accordingly, the refractory materials in accordance with the present invention are preferably used in the clean steel technology.

The invention also provides the use of zirconia and yttria, or zirconia and one or more rare earth minerals and yttria, to improve one or more of the properties of heat-resistance, abrasion resistance and corrosion resistance of an alumina-containing material.

The invention further provides the use of yttria, or of one or more rare earth minerals and yttria, to improve the heat resistance and/or corrosion resistance of a fused alumina-zirconia refractory material.

**Claims**

1. Alumina-zirconia-yttria refractory materials.

2. A material as claimed in claim 1, comprising 10 to 60 wt% zirconia.

3. A material as claimed in claim 1 or claim 2, comprising 0.05-7 wt% of yttria or one or more rare earth minerals and yttria.

4. Fused alumina-zirconia-yttria refractory materials having high-temperature resistance and corrosion resistance including 10-60 wt% of zirconia and 0.05-7 wt% of yttria or rare earth minerals including yttria.

5. A method for producing fused alumina-zirconia-yttria refractory materials comprising mixing zirconia, yttria or rare earth minerals including yttria, and alumina materials, fusing the mixed materials in an electric arc furnace, cooling the fused materials to obtain an ingot, crushing the ingot and classifying the crushed materials.

6. A method as claimed in claim 5, wherein the additive amount of zirconia is 10-60 wt% and the additive amount of yttria or rare earth minerals including yttria is 0.05-7 wt%.

7. A nozzle comprising a material as claimed in any one of claims 1 to 4 or produced by a method as claimed in claim 5 or claim 6.

8. The use of zirconia and yttria, or zirconia and one or more rare earth minerals and yttria, to improve one or more of the properties of heat-resistance, abrasion resistance and corrosion resistance of an alumina-containing material.

9. The use of yttria, or of one or more rare earth minerals and yttria, to improve the heat resistance and/or corrosion resistance of a fused alumina-zirconia refractory material.

**European Patent Office**

# EUROPEAN SEARCH REPORT

Application Number

EP 92 30 0391

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 140 164 (NORTON CO.) | 1-4,6, 8-9 | C04B35/48 C04B35/62 |
| | * page 2, line 10 - page 5, line 21; claims; examples * | | |
| A | * the whole document * | 5,7 | |
| | --- | | |
| X | EP-A-0 042 130 (FELDMÜHLE AG) | 1-2,8-9 | |
| | * example 4 * | | |
| A | * the whole document * | 3-7 | |
| | --- | | |
| X | CHEMICAL ABSTRACTS, vol. 104, no. 22, Columbus, Ohio, US; abstract no. 191765B, K.MIYAHARA ET AL.: 'ZIRCONIA-BASED CERAMICS' * abstract * | 1-4,6, 8-9 | |
| Y | | 7 | |
| | --- | | |
| Y | WORLD PATENTS INDEX LATEST Week 8735, Derwent Publications Ltd., London, GB; AN 87-245356 & JP-A-62 166 060 (DAIDO TOKUSHUKO KK) 22 July 1987 * abstract * | 7 | TECHNICAL FIELDS SEARCHED (Int. Cl.5) C04B C09K |
| | --- | | |
| X,D | US-A-4 671 917 (JAPAN ABRASIVES) *EMBODIMENT 1* | 5-6,8,9 | |
| | --- | | |
| A | US-A-3 079 452 (L'ECTRO-REFRACTAIRE) * the whole document * | 1-9 | |
| | ----- | | |

The present search report has been drawn up for all claims

| Place of search | Date of completion of the search | Examiner |
|---|---|---|
| THE HAGUE | 20 APRIL 1992 | HARBRON J.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)